# EUROPÄISCHE PATENTSCHRIFT

(11) **EP 0 316 833 B1**
(45) Veröffentlichungstag und Bekanntmachung des Hinweises auf die Patenterteilung: **27.01.1993**
(21) Anmeldenummer: 88118918.7
(22) Anmeldetag: 14.11.1988
(51) Int. Cl.: B01L 9/00, B65G 59/06

(54) **Stapelvorrichtung für plattenförmige Gegenstände, insbesondere Titerplatten**
Device for stacking flat objects, in particular titration plates
Dispositif permettant d'empiler des objets plats, en particulier des plaques de titration

(30) Priorität: 16.11.1987 AT 3022/87
(43) Veröffentlichungstag der Anmeldung: 24.05.1989
(73) Patentinhaber: PROLIC SA, 2013 Luxembourg (LU)
(72) Erfinder: Don, Hunter, A-5400 Niederalm 184 a (AT)
(74) Vertreter: Torggler, Paul, Dr.

(56) Entgegenhaltungen:
- EP-A- 0 141 064
- DD-A- 123 662
- GB-A- 1 429 052
- US-A- 4 477 219
- US-A- 4 701 092

## Beschreibung

Die Erfindung bezieht sich auf eine Stapelvorrichtung für plattenförmige Gegenstände, insbesondere Titerplatten od. dgl., mit einem Magazin für die Stapelkörper und einer darunter angeordneten Ablageplatte, die zwischen einem oberen und einem unteren Totpunkt hin und her bewegbar ist, sowie einer Klemmvorrichtung für die Stapelkörper beim Magazin, die von mindestens einer Feder an den untersten bzw. den unmittelbar darüber liegenden Stapelkörper gedrückt wird und diesen hält.

Eine Stapelvorrichtung dieser Art ist aus der DD-A-123 662 bekannt, wobei mittels dieser Vorrichtung aufgestapelte keramische Platten einzeln auf ein Förderband abgesetzt werden.

Aus der EP-A-0 141 064 ist eine Stapelvorrichtung für plattenförmige Gegenstände bekannt, die eine Klemmvorrichtung mit zwei einander gegenüberliegenden waagrechten Klemmbalken umfaßt. Mit einer derartigen Vorrichtung können die von einem Plattenstapel abzunehmenden Platten in schonender Weise von der Vorrichtung aufgenommen werden. Die Platten müssen jedoch gleich ausgeführt sein, damit sie von der Vorrichtung gehandhabt werden können.

In der medizinischen Labortechnik wird beispielsweise zur Messung von Antigenen und/oder Antikörpern das Elisa-Verfahren angewendet (Enzym linked immunosorbent assay), bzw. die verschiedenen Verfahren dieses Systems. Es werden beispielsweise zur Messung von Antigenen in einem ersten Verfahrensschritt Antikörper an der Titerplatte absorbiert, anschließend wird die Titerplatte gewaschen, dann erfolgt in einem weiteren Verfahrensschritt die Beimengung der Testflüssigkeit, welche das Antigen enthält, darauf erfolgt wiederum eine Waschung, worauf enzymmarkierte spezifische Antikörper auf die Titerplatte gegeben werden, dann erfolgt wieder ein Waschen der Titerplatte, worauf die Beimengung des Enzymsubstrates erfolgt.

Die eigentliche Messung erfolgt in einem Photometer.

Sowohl beim Photometer als auch bei der Waschvorrichtung werden die Titerplatten zuerst aufeinander gestapelt und dann einzeln zugeführt. Nach Passieren der jeweiligen Vorrichtung werden die Titerplatten wieder aufgestapelt.

Als Problem hat sich dabei erwiesen, daß die Titerplatten, obwohl ihre Kavitäten im Raster selbstverständlich gleich angeordnet sind, nicht vollständig übereinstimmen. So differieren die einzelnen Erzeugnisse beim Rahmen, beispielsweise in der Stärke oder Breite, oder indem er mit einem zusätzlichen, seitlichen Rand versehen ist oder nicht.

Nach dem bekannten Stand der Technik müssen daher die Stapelgeräte, die zum Abstapeln und Aufstapeln der Titerplatten vor und nach einer Prüfeinrichtung, beispielsweise einem Photometer oder vor und nach einer Wascheinrichtung verwendet werden, jeweils auf ein bestimmtes Fabrikat einer Titerplatte ausgerichtet sein.

Aufgabe der Erfindung ist es, eine Stapelvorrichtung der eingangs erwähnten Art zu schaffen, mit der es möglich ist, auch Titerplatten unterschiedlicher Art zu stapeln bzw. abzustapeln, und zwar ohne daß eine besondere Verstellung an der Stapelvorrichtung notwendig ist.

Die erfindungsgemäße Aufgabe wird dadurch gelöst, daß die Klemmvorrichtung zwei einander gegenüberliegende waagrechte Klemmbalken umfaßt, die mittels eines Motors vom Stapelkörper synchron wegbewegt werden, wobei die Klemmbalken um eine senkrechte Achse drehbar gelagert sind.

Bei einer erfindungsgemäßen Vorrichtung kann der Stapel aus unterschiedlichen Titerplatten bestehen.

Da das Anpressen der Klemmbalken an die Titerplatte nicht durch den Motor sondern durch Federn erfolgt, können die Titerplatten auch unterschiedlich breit sein. Sie werden immer gleich fest gehalten.

Vorteilhaft ist vorgesehen, daß die Klemmbalken jeweils mit zwei Anpreßvorsprüngen versehen sind, wobei die Anpreßvorsprünge beispielsweise flache Stege sind.

Diese Vorsprünge bzw. flachen Stege ermöglichen einen festen, gleichmäßigen Halt am Rand der Titerplatte, auch wenn dieser nicht über die gesamte Höhe gleich ausgebildet ist, also beispielsweise oben oder unten einen simsartigen Vorsprung aufweist.

Zur Verbesserung des Haltes ist die Anpreßfläche eines jeden Anpreßvorsprunges bzw. Steges mit einem Rauhbelag versehen. Bevorzugte Materialien für eine derartige Beschichtung sind beispielsweise Wolframkarbid oder Diamant, da diese eine harte desinfiszierbare Oberfläche garantieren.

Um ein Abrutschen des Plattenstapels im Störfall zu verhindern ist in einem weiteren Ausführungsbeispiel vorgesehen, daß unterhalb der Anpreßvorsprünge federnd beaufschlagte Stifte verschiebbar im Klemmbalken gelagert sind, die weiter als die Anpreßvorsprünge vorragen. Die Feder ist vorteilhaft eine äußerst schwache Blattfeder, sodaß die Stifte, wenn sie an der untersten Titerplatte anliegen, während die darüberliegende Titerplatte von den Klemmbalken gehalten wird, auf die unterste Titerplatte keinerlei Halt ausübt.

Vorteilhaft ist weiters vorgesehen, daß der Motor mit einem die Klemmbalken bewegenden Getriebeteil über eine Stange verbunden ist, die an beiden Lagerstellen Spiel aufweist.

Auf diese Art und Weise wird eine einfaße Anpassung an unterschiedlich breite Titerplatten erreicht, wobei die Toleranz dem Spiel der Stange an den Lagerstellen entspricht. Dieses Spiel ist möglich, weil die eigentliche Anpreßung der Klemmbalken an die Titerplatte durch Federn und nicht durch den Motor erfolgt.

Es kann jedoch auch vorgesehen sein, daß der Motor mit einem die Klemmbalken bewegenden Getriebeteil über eine Stange verbunden ist, die an einer Lagerstelle mit Paßsitz geführt ist und an der anderen Lagerstelle einen Längs-schlitz aufweist, in den ein dem Motor oder dem Getriebeteil zugehörigen Zapfen ragt.

Der Rand des Längsschlitzes bildet dabei einen Anschlag, der verhindert, dass einer der Stapelkörper zu sehr geklemmt wird.

Erfindungsgemäß ist weiters vorgesehen, daß die Klemmbalken aus einer unteren Ruhestellung nach oben in der Vertikalen verschiebbar sind, wobei vorteilhaft die von den Klemmbalken gehaltenen Stapelkörper sich knapp unterhalb des oberen Totpunktes der Auflage befinden.

Dadurch wird eine absolut erschütterungsfreie Übergabe der Stapelkörper von den Klemmbalken auf die Auflageplatte gewährleistet. Die Auflageplatte kann die Stapelkörper beim Hinauffahren geringfügig nach oben drücken, wobei die Klemmbalken den Weg mitmachen. Es kommt zu keinem abrupten Anstoßen der Auflageplatte an der Unterseite des untersten Stapelkörpers, wenn der obere Totpunkt der Auflageplatte sich etwas oberhalb dieser befindet und umgekehrt fallen die Stapelkörper nicht auf die Auflageplatte hinunter, wenn der unterste Stapelkörper von den Klemmbalken freigegeben wird und der Totpunkt der Auflageplatte sich knapp unterhalb der Unterseite des untersten Stapelkörpers befindet.

Die Klemmbalken können dabei von einer Feder in die untere Ruhestellung gedrückt werden.

Ein weiteres Ausführungsbeispiel der Erfindung sieht vor, daß die Klemmbalken an der unteren Kante vorzugsweise stegartige Vorsprünge aufweisen, die bei von den Klemmbalken gehaltenem Stapelkörper unter den Stapelkörper ragen.

Die stegartigen Vorsprünge verhindern wiederum, daß ein abrutschender Stapelkörper hinunterfallen kann.
Er wird von den Vorsprüngen aufgefangen. Die Vorsprünge kragen andererseits nur wenig aus, damit ein Rückstapeln der Stapelkörper möglich ist.

Ein weiteres Ausführungsbeispiel der Erfindung sieht vor, daßdie Vorschubeinrichtung einen bügelförmigen Mitnehmer aufweist, der mit einem zu einer Seite des rechteckigen Stapelkörpers parallelen Mittelsteg und zwei schrägen im gleichen Winkel nach außen abstehenden Mitnehmerstegen versehen ist, die an einer vorderen und einer hinteren Ecke des Stapelkörpers anliegen.

Durch die V-förmig nach außen abstehenden Mitnehmerstege wird der Stapelkörper beispielsweise einer Titerplatte immer exakt zentriert. Er befindet sich also im Arbeitsbereich und unterhalb des Stapels, dem er zugeführt werden soll, immer in der richtigen Position.

Werden beispielsweise bei einem Analysegerät zwei erfindungsgemäße Stapelvorrichtungen mit modifizierter Steuerung verwendet, kann auch rückgestapelt werden. Dies bringt den Vorteil, daß die Titerplatten nach der Prüfung in der gleichen Reihenfolge angeordnet sind und so ohne Zwischenstation der nächsten Prüfung zugeführt werden können.

Nachfolgend wird ein Ausführungsbeispiel der Erfindung anhand der Figuren der beiliegenden Zeichnungen beschrieben. Die Stapelkörper sind Titerplatten.

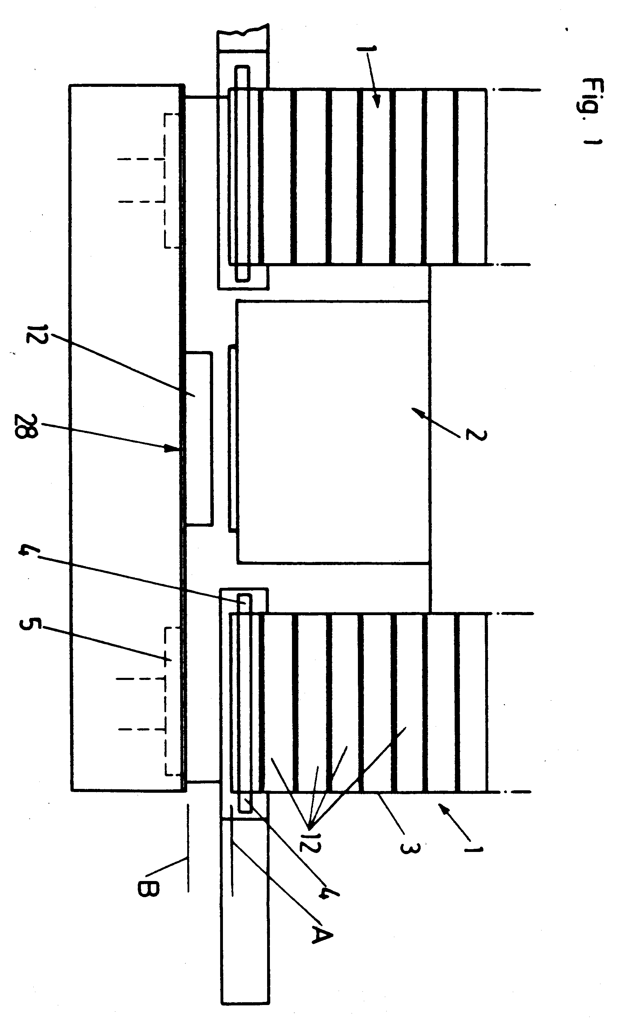

Die Fig. 1 zeigt schematisch eine Seitenansicht eines Analysegerätes mit zwei erfindungsgemäßen Stapelvorrichtungen.

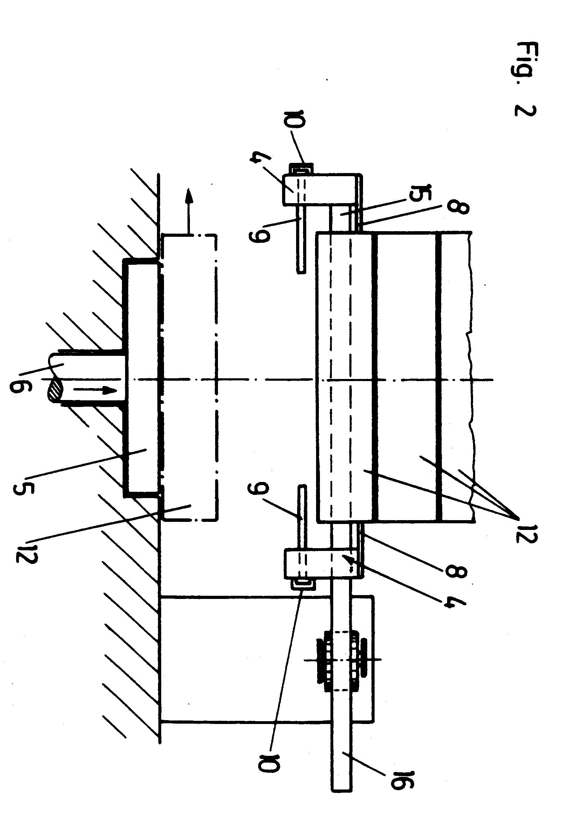

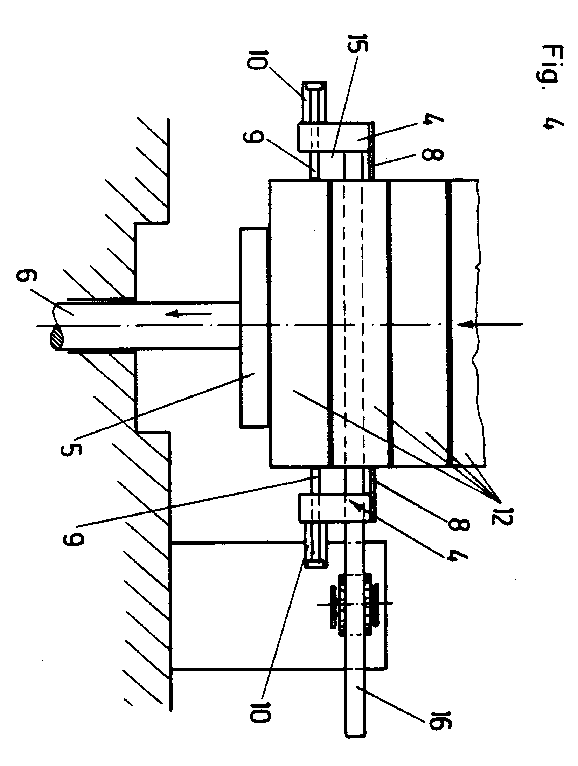

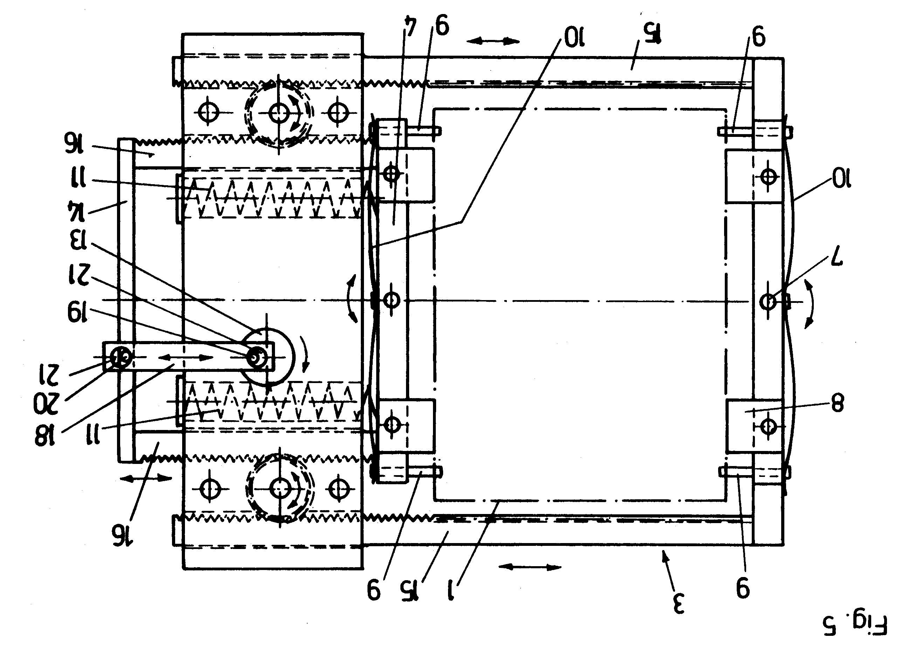

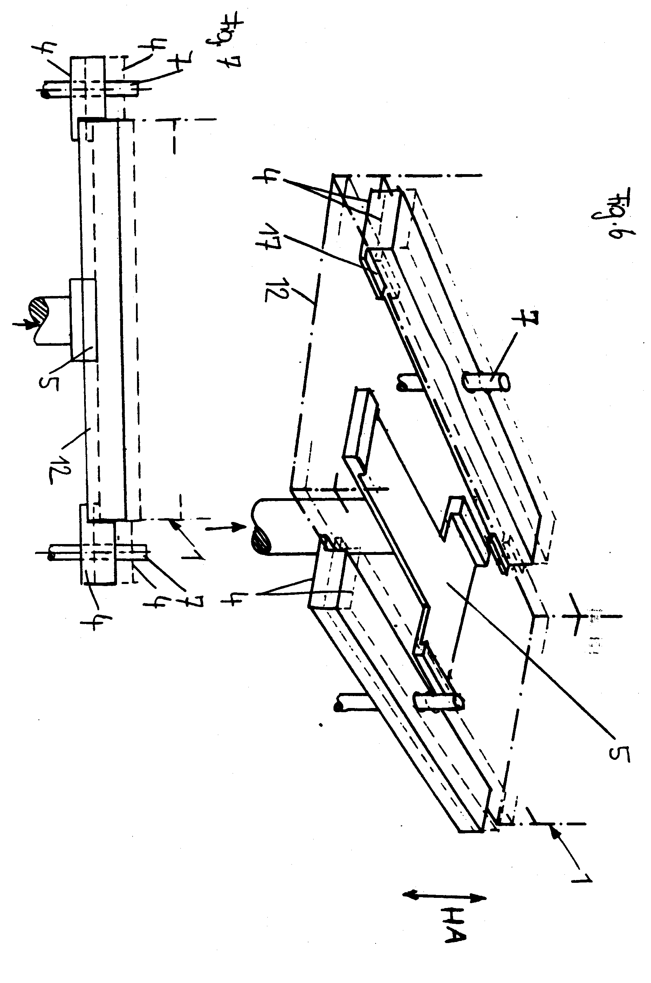

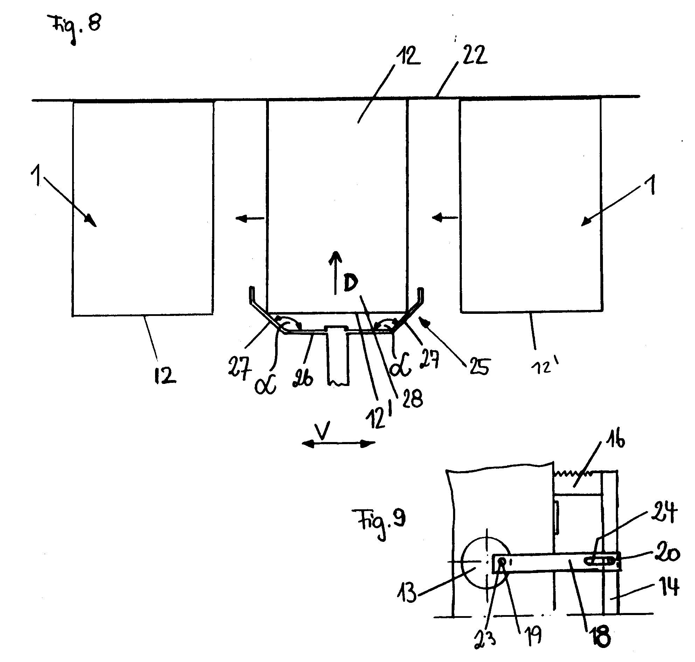

Die Fig. 2 bis 4 zeigen jeweils eine schematisch gehaltene Seitenansicht der erfindungsgemäßen Stapelvorrichtung, wobei die Stadien des Abnahmevorganges einer Titerplatte gezeigt sind, die Fig. 5 zeigt ebenso schematisch eine Draufsicht auf eine erfindungsgemäße Stapelvorrichtung, die Fig.6 zeigt schematisch eine weitere Ausführungsform der Klemmbalken, die Fig.7 zeigt eine Seitenansicht der Ausführungsform der Fig. 6, die Fig.8 zeigt eine schematische Draufsicht auf die horizontale Vorschubeinrichtung und die Fig.9 zeigt eine Draufsicht auf das Antriebsgestänge für die Klemmbalken.

Wie aus der Fig. 1 ersichtlich, kann eine erfindungsgemäße Stapelvorrichtung 1 jeweils vor und hinter einem Photometer 2 angeordnet sein. Die Hauptbestandteile der erfindungsgemäßen Stapelvorrichtung sind das Magazin 3, die beiden Klemmbalken 4 und die Ablageplatte 5.

Die Ablageplatte 5 wird beispielsweise über Kolbenzylindereinheiten in der Vertikalen bewegt, sodaß die jeweils unterste Titerplatte von der Position A im Magazin 3 auf die Untersuchungsebene B des Gerätes abgesenkt wird.

An den beiden Längsseiten des Magazins 3 sind die Klemmbalken 4 angeordnet. Die Klemmbalken 4 lagern auf einer vertikalen Achse 7 und sind um diese in der Richtung der Pfeile der Fig. 5 dreh- bzw. kippbar, sodaß sie Ungleichheiten am Rand der Titerplatte 12 ausgleichen können.

Die Klemmbalken 4 sind an ihren Enden mit je einem Steg 8 versehen, der als Anpreßvorsprung dient.

Unterhalb eines jeden Steges 8 ist ein Stift 9 verschiebbar im Klemmbalken 4 gelagert.

Die Stifte 9 werden von einer schwachen Blattfeder 10 gehalten.

Die Klemmbalken 4 werden von zwei Druckfedern 11 an die Titerplatten 12 gedrückt. Der Druck der Druckfedern 11 ist ausreichend, um die Titerplatten 12 klemmend zu halten.

Die jeweils gehaltene Titerplatte 12 wird dadurch freigegeben, daß ein Motor 13 über ein Gestänge die Klemmbalken 4 von der Titerplatte 12 wegzieht.

Das Gestänge umfaßt vier Zahnstangen 15, 16, von denen jeweils zwei mit einem Klemmbalken 4 verbunden sind und die über Zahnräder gegenläufig synchron gesteuert werden.

Die Zahnstangen 15, 16 werden vom Motor 13 über eine Stange 18 verschoben. Die Stange 18 greift an einer Querstange 14 an, die die Zahnstangen 16 verbindet. Dadurch wird einerseits ein Klemmbalken 4 linear bewegt und andererseits werden die Zahnräder gedreht, wodurch die Zahnstangen 15 des zweiten Klemmbalkens 4 gegenläufig zu den Zahnstangen 16 verschoben werden.

Die Lagerstellen für einen Verankerungsstift 19 einer Antriebsscheibe des Motors 13 und des Verankerungsstiftes 20 auf der Querstange 14 werden dabei von relativ großen Löchern 21 in der Stange 18 gebildet, die die Verankerungsstifte 19, 20 mit Spiel aufnehmen.

Da das Anpressen der Klemmbalken 4 durch die Federn 11 erfolgt, wird der Halt der Titerplatten 12 durch das Spiel an den Lagerstellen der Stange 18 nicht gelockert. Dieses Spiel erlaubt es jedoch, daß mit der erfindungsgemäßen Stapelvorrichtung auch Titerplatten 12 auf-und abgestapelt werden können, deren Breite geringfügig differiert. Wären die Verankerungsstifte 19,20 in der Stange 18 exakt gelagert, würden sich die Klemmbalken 4 in der Klemmstellung jeweils in einem ebenso exakt gleichen Abstand von einander befinden.

Das Abstapeln von Titerplatten 12 erfolgt mit der erfindungsgemäßen Stapelvorrichtung folgendermaßen.

Der im Magazin 3 befindliche Stapel Titerplatten 12 wird von der Ablageplatte 5 gehalten.

Nun wird die zweite Titerplatte 12 von unten mittels der beiden Klemmbalken 4 geklemmt. (Fig. 4) Die Ablageplatte 5 kann nun durch die Kolbenzylindereinheit 6 auf das Niveau B abgesenkt werden (Fig. 2), worauf die darauf befindliche Titerplatte 12 durch herkömmliche, nicht gezeigte, horizontale Fördermittel weiter transportiert wird.

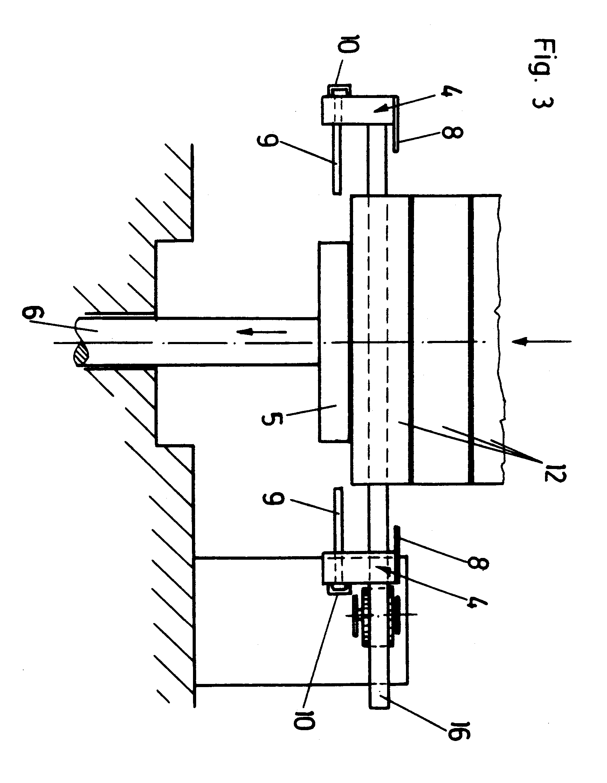

Die leere Ablageplatte 5 wird wieder hoch gefahren, bis sie an der untersten Titerplatte 12 anliegt (Fig. 3). Nun werden die Klemmbalken 4 über den Motor 13 und das Gestänge 18, 14, 15, 16 gegen den Druck der Federn 11 von der untersten Titerplatte 12 seitlich abgezogen. Daraufhin kann der gesamte Stapel von Titerplatten 12 um die Höhe einer Titerplatte 12 abgesenkt werden. Daraufhin gibt der Motor 13 die Klemmbalken 4 wieder frei und diese werden wiederum an die nächste Titerplatte 12, d.h. an die zweite von unten angepreßt und halten somit den gesamten Stapel. Es ergibt sich wieder die Situation der Fig. 4. Die Ablageplatte 5 senkt sich mit der untersten Titerplatte 12. Der Vorgang kann beliebig wiederholt werden.

Durch eine modifizierte Steuerung ist es selbstverständlich auch möglich Titerplatten aufzustapeln, wobei die Titerplatten 12 jeweils von unten zugeführt werden. Hierbei muß selbstverständlich beim Zuführen einer Titerplatte 12 der Stapel jeweils um die Höhe einer Titerplatte angehoben werden, sodaß die Klemmbalken 4 jeweils die unterste Titerplatte halten.

Die Ablageplatte 5 ist vorteilhaft mit einer Dreipunktauflage für die Titerplatten 12 versehen, damit diese ruhig gehalten sind. Die Titerplatten 12 liegen dabei vorteilhaft nur mit ihren Rändern auf der Abnahmeplatte 5 auf.

Die Fig. 6 zeigt eine weitere Variante der Klemmbalken 4. Diese sind mit zwei schmalen stegartigen Vorsprüngen 17 versehen, die bei geklemmter Titerplatte 12 unter die Titerplatte ragen und so wie die Stifte 9 verhindern, daß eine abrutschende Titerplatte 12 hinunterfällt.

In der Fig. 6 ist auch eingezeichnet, daß die Klemmbalken 4 in der Höhe, d. h. in der Richtung des Doppelpfeiles HA bewegbar ist. Dieser Höhenausgleich bewirkt, daß die geklemmte Titerplatte 17 zusammen mit den Klemmbalken 4 von der Ablageplatte 5 angehoben werden kann. Es erfolgt so eine erschütterungsfreie Übergabe der unteren Titerplatte 12 von den Klemmbalken 4 auf die Ablageplatte 5. Man muß dabei bedenken, daß es kaum möglich ist, den oberen Totpunkt dieser Ablageplatte 5 so exakt einzustellen, daß dieser genau mit der Unterseite der von den Klemmbalken 4 gehaltenen untersten Titerplatte 12 übereinstimmt und so die Ablageplatte 5 bei der Aufwärtsbewegung entweder an der Titerplatte 12 anstößt, oder die Titerplatte 12 nach der Freigabe durch die Klemmbalken 4 einem kurzen Weg auf die Ablageplatte 5 hinunterfällt.

Dieser Toleranzausgleich ist auch wichtig beim Rückstapeln, d. h. wenn die Titerplatte 12 von unten einem neuen Stapel zugeführt wird.

Wie aus der Fig. 8 ersichtlich, weist die Vorschubeinrichtung mittels der die Titerplatte 12 von einem Magazin 1 über den Arbeitsbereich 28 zum zweiten Magazin 1 geführt wird, einen bügelförmigen Mitnehmer 25 auf.

Der Mitnehmer 25 ist in der Richtung des Doppelpfeiles V bewegbar. Er weist einen zur Längsseite 12' der Titerplatte 12 parallelen Steg 26 und zwei seitliche divergierende im gleichen Winkel Alpha zum Steg 26 stehende Mitnehmerstege 27 auf.

Die Mitnehmerstege 27 liegen jeweils an einer vorderen und an einer hinteren Ecke der Titerplatte 12 an und da der Bügel 25 die Titerplatte 12 in der Richtung des Pfeiles D auf eine Gegenfläche 22 drückt, wird die Titerplatte 12 in bezug auf den Bügel 19 automatisch zentriert. Dies hat zur Folge, daß sie sich im Arbeitsbereich 18 und unterhalb der Magazine 1 immer in der exakten Lage befindet.

Die Fig. 9 zeigt eine weitere Variante der Stange 18, die den Motor 13 mit der Querstange 14 verbindet. Hierbei ist die Stange 18 an einer Lagerstelle 23 exakt geführt und weist an der anderen Lagerstelle einen Längsschlitz 24 auf. In diesen Längsschlitz 24 ragt wiederum ein Verankerungsstift 20. Der Rand des Längsschlitzes 24 wirkt als Anschlag, sodaß keine Titerplatte 12 zu stark geklemmt werden kann.

## Patentansprüche

1. Stapelvorrichtung für plattenförmige Gegenstände, insbesondere Titerplatten (12) od. dgl., mit einem Magazin (3) für die Stapelkörper und einer darunter angeordneten Ablageplatte (5), die zwischen einem oberen und einem unteren Totpunkt hin und her bewegbar ist, sowie einer Klemmvorrichtung für die Stapelkörper beim Magazin (3), die von mindestens einer Feder (11) an den untersten bzw. den unmittelbar darüber liegenden Stapelkörper drückbar ist und diesen hält, dadurch gekennzeichnet, daß die Klemmvorrichtung zwei einander gegenüberliegende waagrechte Klemmbalken (4) umfaßt, die mittels eines Motors (13) vom Stapelkörper synchron wegbewegbar sind, wobei die Klemmbalken (4) um eine senkrechte Achse (7) drehbar gelagert sind.

2. Stapelvorrichtung nach Anspruch 1, dadurch gekennzeichnet, daß die Klemmbalken (4) jeweils mit zwei Anpreßvorsprüngen versehen sind.

3. Stapelvorrichtung nach Anspruch 2, dadurch gekennzeichnet, daß die Anpreßvorsprünge flache Stege (8) sind.

4. Stapelvorrichtung nach Anspruch 2 und 3, dadurch gekennzeichnet, daß die Anpreßflächen der Anpreßvorsprünge (8) mit einem Rauhbelag, beispielsweise aus Wolframkarbid beschichtet sind.

5. Stapelvorrichtung nach Anspruch 2, dadurch gekennzeichnet, daß unterhalb der Anpreßvorsprünge federnd beaufschlagte Stifte (9) verschiebbar in Klemmbalken (4) gelagert sind, die weiter als die Anpreßvorsprünge vorragen.

6. Stapelvorrichtung nach Anspruch 1, dadurch gekennzeichnet, daß der Motor (13) mit einem die Klemmbalken (4) bewegenden Getriebsteil über eine Stange (18) verbunden ist, die an beiden Lagerstellen Spiel aufweist.

7. Stapelvorrichtung nach Anspruch 1, dadurch gekennzeichnet, daß die Ablageplatte (5) am untersten Stapelkörper bereits anliegt, solange dieser noch von den Klemmbalken (4) gehalten wird.

8. Stapelvorrichtung nach Anspruch 1, dadurch gekennzeichnet, daß die Klemmbalken (4) aus einer unteren Ruhestellung nach oben in der Vertikalen verschiebbar sind.

9. Stapelvorrichtung nach Anspruch 8, dadurch gekennzeichnet, daß die Klemmbalken (4) von einer Feder in die untere Ruhestellung drückbar sind.

10. Stapelvorrichtung nach Anspruch 1, dadurch gekennzeichnet, daß die Klemmbalken (4) an der unteren Kante vorzugsweise stegartige Vorsprünge (17) aufweisen, die bei von den Klemmbalken (4) gehaltenem Stapelkörper unter den Stapelkörper ragen.

11. Stapelvorrichtung nach Anspruch 1, dadurch gekennzeichnet, daß zwei Magazine (1) für die Stapelkörper vorgesehen sind, die sich an gegenüberliegenden Seiten eines Arbeitsbereiches (28), den die Stapelkörper mittels einer Vorschubeinrichtung horizontal durchfahren, befinden.

12. Stapelvorrichtung nach Anspruch 11, dadurch gekennzeichnet, daß die Vorschubeinrichtung einen bügelförmigen Mitnehmer (25) aufweist, der mit einem zu einer Seite des rechteckigen Stapelkörpers parallelen Mittelsteg (26) und zwei schrägen im gleichen Winkel nach außen abstehenden Mitnehmerstegen (27) versehen ist, die an einer vorderen und einer hinteren Ecke des Stapelkörpers anliegen.

13. Stapelvorrichtung nach Anspruch 8, dadurch gekennzeichnet, daß die von den Klemmbalken (4) gehaltenen Stapelkörper sich knapp unterhalb des oberen Totpunktes der Auflage befinden.

14. Stapelvorrichtung nach Anspruch 1, dadurch gekennzeichnet, daß der Motor (13) mit einem die Klemmbalken (4) bewegenden Getriebeteil über eine Stange (18) verbunden ist, die an einer Lagerstelle (23) mit Paßsitz geführt ist und an der anderen Lagerstelle einen Längsschlitz (24) aufweist, in den ein dem Motor oder dem Getriebeteil zugehöriger Zapfen (19,20) ragt.

## Claims

1. An apparatus for stacking panel-shaped objects, particularly standard panels (12) or the like, with a magazine (3) for the stacked items and beneath it a supporting plate (5) adapted for reciprocating movement between an upper and a lower dead centre, and with a device for clamping the items being stacked in the magazine (3), the clamping device being capable of being pressed by at least one spring (11) against and supporting the extreme bottom item to be stacked, or that which is directly above it, characterised in that the clamping device comprises two oppositely disposed horizontal clamping members (4) adapted to be moved by a motor (13) synchronously away from the item to be stacked, the clamping members (4) being mounted to rotate about a vertical axis (7).

2. A stacking apparatus according to claim 1, characterised in that the clamping members (4) are in each case provided with two pressure-applying projections.

3. A stacking apparatus according to claim 2, characterised in that the pressure-applying projections are flat webs (8).

4. A stacking apparatus according to claim 2 and 3, characterised in that the pressure-applying surfaces of the projections (8) are coated with a roughened surface, consisting for example of tungsten carbide.

5. A stacking apparatus according to claim 2, characterised in that under the pressure-applying projections there are spring loaded pins (9) which are displaceably mounted in the clamping members (4) and which protrude farther than the pressure-applying projections.

6. A stacking apparatus according to claim 1, characterised in that the motor (13) is connected by a rod (18) which has a clearance at both mountings to a transmission part which moves the clamping members (4).

7. A stacking apparatus according to claim 1, characterised in that the supporting plate (5) already bears on the very lowest item to be stacked while this is still being held by the clamping members (4).

8. A stacking apparatus according to claim 1, characterised in that the clamping members (4) are adapted for displacement out of a low inoperative position upwardly in a vertical direction.

9. A stacking apparatus according to claim 8, characterised in that the clamping members (4) can be pressed into the low inoperative position by a spring.

10. A stacking apparatus according to claim 1, characterised in that the clamping members (4) have at their bottom edge preferably web-like projections (17) which project underneath the items to be stacked when these are held by the clamping members (4).

11. A stacking apparatus according to claim 1, characterised in that two magazines (1) are provided for items to be stacked and are disposed on opposite sides of a working area (28) through which the items to be stacked are passed horizontally by a feed arrangement.

12. A stacking apparatus according to claim 11, characterised in that the feed arrangement comprises a bow-shaped entraining means (25) which has a central web (26) parallel with one side of the rectangular item to be stacked and, projecting outwardly at the same angle, two slanting entraining webs (27) which bear on one front and one rear corner of the item being stacked.

13. A stacking apparatus according to claim 8, characterised in that the items for stacking and which are supported by the clamping members (4) are disposed just below the top dead centre position of the support.

14. A stacking apparatus according to claim 1, characterised in that the motor (13) is connected to a transmission part which moves the clamping members (4) by a rod (18) guided with a snug fit at one bearing point (23) while at the other bearing point it has a longitudinal slot (24) into which protrudes a journal (19, 20) belonging to the motor or to the transmission part.

## Revendications

1. Dispositif d'empilage pour des objets plats, en particulier des plaques de titration (12) ou analogues, avec un magasin (3) pour les corps à empiler et une plaque de dépose (5) disposée en dessous et déplaçable entre un point mort supérieur et un point mort inférieur, ainsi qu'un dispositif de serrage, pour les corps empilés disposés dans le magasin (3), susceptible d'être pressé par au moins un ressort (11) sur le corps empilé le plus bas, respectivement celui qui est situé immédiatement au-dessus et assurant son maintien, caractérisé en ce que le dispositif de serrage comprend deux poutres de serrage (4) horizontales mutuellement opposées, susceptibles d'être écartées de façon synchrone par rapport aux corps empilés, au moyen d'un moteur (13), les poutres de serrage (4) étant montées tournantes autour d'un axe vertical (7).

2. Dispositif d'empilage selon la revendication 1, caractérisé en ce que les poutres de serrage (4) sont chacune pourvues de deux saillies de pressage.

3. Dispositif d'empilage selon la revendication 2, caractérisé en ce que les saillies de pressage sont des nervures plates (8).

4. Dispositif d'empilage selon les revendications 2 et 3, caractérisé en ce que les faces de pressage des saillies de pressage sont recouvertes d'un revêtement rugueux, par exemple en carbure de tungstène.

5. Dispositif d'empilage selon la revendication 2, caractérisé en ce que des tiges (9) sollicitées de façon élastique, déplaçables dans les poutres de serrage (4) et faisant saillie plus avant que les saillies de pressage sont montées au-dessous des saillies de pressage.

6. Dispositif d'empilage selon la revendication 1, caractérisé en ce que le moteur (13) est relié à une partie de transmission déplaçant les poutres de serrage (4), par l'intermédiaire d'une bielle (18) présentant du jeu aux deux points de rotation.

7. Dispositif d'empilage selon la revendication 1, caractérisé en ce que la plaque de dépose (5) appuie déjà sur le corps empilé le plus bas, tant qu'il est encore maintenu par les poutres de serrage.

8. Dispositif d'empilage selon la revendication 1, caractérisé en ce que les poutres de serrage (4) sont déplaçables à partir d'une position de repos inférieur, verticalement en direction du haut.

9. Dispositif d'empilage selon la revendication 8, caractérisé en ce que les poutres de serrage (4) sont susceptibles d'être pressées par un ressort dans la position de repos inférieure.

10. Dispositif d'empilage selon la revendication 1, caractérisé en ce que les poutres de serrage (4) présentent sur l'arête inférieure des saillies (17), de préférence du genre en nervure, passant sous le corps empilé lorsqu'il est maintenu par les poutres de serrage (4).

11. Dispositif d'empilage selon la revendication l, caractérisé en ce que sont prévus pour les corps empilés deux magasins (1) se trouvant sur les côtés opposés d'une zone de travail (28) que parcourent horizontalement les corps empilés, au moyen d'un dispositif d'avancement.

12. Dispositif d'empilage selon la revendication 12, caractérisé en ce que le dispositif d'avancement présente un organe d'entraînement (25) en forme d'étrier, pourvu d'une âme médiane (26), parallèle à un côté du corps empilé rectangulaire, et de deux nervures d'entraînement (27), s'écartant vers l'extérieur avec le même angle et appuyant sur un coin avant et un coin arrière du corps empilé.

13. Dispositif d'empilage selon la revendication 8, caractérisé en ce que les corps empilés maintenus par les poutres de serrage (4) se trouvent juste au-dessous du point mort inférieur de l'assise.

14. Dispositif d'empilage selon la revendication 1, caractérisé en ce que le moteur (13) est relié à une pièce de transmission, déplaçant les poutres de serrage (4), par l'intermédiaire d'une bielle (18), guidées avec un ajustement fin sur un point de rotation (23) et présentant à l'autre point de rotation une fente allongée (24), dans laquelle pénètre un tourillon (19,20) associé au moteur ou à la partie de transmission.
